# EUROPEAN PATENT APPLICATION

(11) **EP 2 919 182 A2**
(43) Date of publication of application: **16.09.2015**
(21) Application number: 14190931.7
(22) Date of filing: 29.10.2014
(51) Int. Cl.: G06Q 40/08

(54) **Method for risk management of marine mooring systems**

(30) Priority: 31.10.2013 US 201361898410 P
(71) Applicant: Welaptega Marine Limited, Halifax, Nova Scotia B3J 3P6 (CA)
(72) Inventor: Hall, Anthony, Halifax, Nova Scotia B3J 3Z3 (CA)
(74) Representative: Bumke, Jakob Wenzel

(57) **Abstract**

A method for assessing a marine mooring system while the marine mooring system is installed in water for ensuring compliance with known marine standards and insurance guidelines. The method using at least one processor and various computer instructions located in a least one data storage connected to a network.

## Description

### CROSS REFERENCE TO RELATED APPLICATIONS

The present application claims priority to and the benefit of co-pending US Provisional Patent Application Serial No.: 61/898,410 filed on October 31, 2013, entitled "COMPUTER IMPLEMENTED METHOD FOR RISK MANAGEMENT AND ASSET COMPLIANCE MANAGEMENT OF MARINE MOORING SYSTEMS". This reference is hereby incorporated in its entirety.

### FIELD

The present embodiments generally relate to a risk based engineering compliance process to determine the current physical condition and the residual capacity of offshore marine mooring systems using a dynamic computer implemented model.

### BACKGROUND

A need exists for a method to analyze marine mooring systems of ships and other floating installations for underwriting by insurance carriers through integration of historical physical data, historical operational data and historical environmental data with detailed physical inspections to evaluate the expected future performance of a marine mooring system for floating vessels or structure in the sea.

The present embodiments meet these needs.

### BRIEF DESCRIPTION OF THE DRAWINGS

The detailed description will be better understood in conjunction with the accompanying drawings as follows:
Figure 1 is a diagram of equipment usable with the method according to one or more embodiments.
Figure 2 is a diagram of the administrative data storage containing computer instructions according to one or more embodiments
Figure 3 is a diagram of client data usable with the method according to one or more embodiments.
Figure 4 is a diagram of the dynamic mooring system model according to one or more embodiments.
Figure 5 is an exemplary compliance status report according to one or more embodiments.
Figure 6 is an exemplary risk based inspection plan according to one or more embodiments.
Figures 7A-7D show diagrams of a subsea measurement and data collection system usable in implementing the method according to one or more embodiments.
Figure 8 is an exemplary post inspection mooring compliance status report according to one or more embodiments.
Figure 9 is an exemplary mooring fitness for a purpose assessment report according to one or more embodiments.
Figures 10A-10C depict steps of the method according to one or more embodiments.
The present embodiments are detailed below with reference to the listed Figures.

### DETAILED DESCRIPTION OF THE EMBODIMENTS

Before explaining the present method in detail, it is to be understood that the method is not limited to the particular embodiments and that it can be practiced or carried out in various ways.

The invention prevents loss of station keeping of a floating vessel due to the failure of one or more of the vessel mooring lines.

The invention increases safety at sea to save lives and prevent, capital losses and stop environmental damage

The invention prevent hazards and implications of complete and partial loss of stationkeeping including preventing complete loss of stationkeeping, resulting in the vessel drifting at sea without power and heading control and crashing into land or other vessels.

The embodiments prevent collisions and reduce the chance of death on floating vessels by preventing collisions which would sink a vessel.

The methods could reduce the possibility of fire and/or explosion on a floating vessel due to ignition of flammable liquids or gases on either or both facilities by preventing the breakage of mooring lines unexpectedly.

The embodiments can prevent the hazards associated with complete and partial loss of stationkeeping by preventing crushing due to the shifting of unsecured or inadequately secured equipment and storage containers, and penetration injuries due to damage to and collapse of equipment onto personnel, and/or the loss of balance/stability by personnel because of extreme vessel motions, resulting in accidental collisions with sharp objects.

The embodiments can prevent the hazards associated with complete and partial loss of stationkeeping by preventing unexpected motions of the vessel due to the effects of a loss of heading control on the three principal vessel motions: pitch, roll and yaw.

Loss of stationkeeping can result in violent motions represent an extreme hazard to onboard personnel who are attempting to move around the vessel and exposes them to a range of injury hazards due to the loss of balance/stability including broken bones due to falls and collisions, head injuries due to falls and collisions, penetration injuries due to impacts with sharp objects, crushing and soft tissue penetrative injuries due to the shifting of unsecured or inadequately secured equipment. The embodiments prevent these problems.

The present embodiments increase safety at sea by requiring marine mooring systems to be standardized and aligned with the latest insurance mooring integrity management guidance from authorities such as the Joint Rig Committee of The London Offshore Insurance Market based in London, England, which is a standards setting organization.

The present embodiments use mooring compliance standards for offshore marine mooring systems including local regulations and relevant mooring class standards. Marine mooring systems are classified into various classes based on purpose, geographical location and life expectancy.

The present embodiments enable an audit of physical conditions of a marine mooring system with a tubular inspection system or a variety of mooring inspection systems and with that data and the standards promulgated for guidance, creates a dynamic forecast of expected future performance of the marine mooring system.

The present embodiments integrally download rules and regulations from the Floating Unit Mooring Assessment guidance for mooring integrity management. This invention is a risk based audit and inspection method to generate an engineering opinion for Mooring Fitness for Purpose Assessment (MFPA). The floating unit mooring assessment process is progressive and provides a framework that decreases operational risk as the level of analytical detail increase.

In an embodiment, the embodiments are performed by integrating historical wind, wave and current data into information on mooring design including mooring design codes, mooring components, mooring materials and mooring performance histories.

In this embodiment, the operating history of the marine mooring system is incorporated into the integrated historical data with design codes. The operating history includes a summary review of vessel heading control, offloading cycles, ballasting and emergency disconnection procedures.

Still in this embodiment, advanced industry standard dynamic modeling is used with the integrated historical data with design codes and operating history to provide a summary of mooring behaviors.

With the summary of mooring behaviors, inspection protocols that use progressively higher resolution technologies, from a general visual inspection through a focused visual inspection to a detailed physical inspection to provide insights into degradative mechanisms and the physical condition of degraded components of the marine mooring system enabling prioritization of components of the system as risky, and not at risk.

The result of using the method is that operational conditions of the mooring system are assessed to ensure uninterrupted operation and production. Another result is that a review of residual capacity of the mooring system is performed for analysis of field life and to determined anticipated repairs.

The embodiments can be used to give consistent year on year understanding of specific marine mooring system performance in specific weather conditions at a specific geographic location with typical vessels that connect to and disconnect from the marine mooring system with typical cargos of those vessels.

The Mooring Fitness for Purpose Assessment (MFPA) process is primarily intended to ensure uninterrupted station keeping by offshore floating production and drilling vessels and associated moored systems.

The following definitions can be used within the current application.

The term "administrative processor connected to an administrative data storage" as used herein can refer to a computer with a processor and data storage or a cloud based processor connected to cloud based data storage in a computing cloud. The processor can be in electronic communication with the data storage and separated from the data storage. The data storage is a non-transitory computer readable medium.

The term "compliance status report" as used herein can refer to a report that captures current status of the marine mooring system prior to doing at least a qualitative subsea survey, a quantative survey relative to the downloaded known marine standards or both.

The term "data" as used herein can refer to digital sensor readings or information from a client data storage connected to the network concerning the marine mooring system or from information provided by a remotely operable subsea measurement and data collection tool on the marine mooring system. Data can include information provided by at least one of a tubular measurement system, a mechanical chain measuring system, an optical chain measurement system, a 3D photogrammetric modeling system, a high definition 3D video system, and a magnetic flux leakage detection system.

The term "an end of life time frame of a marine mooring component" as used herein can refer to an anticipated operational life duration or service duration of a component. For an example, a chain for a mooring system with a corrosion allowance of 5 millimeters with a corrosion rate of 0.2 millimeters per year would have an end of life time frame of 25 years in the North Sea for a mooring chain link on a marine mooring system attached to a floating production platform installed within 30 days in the North Sea.

The term "detailed physical inspection" as used herein can refer to a very close inspection which is more than a simple visual inspection of the marine mooring system and performs at least one additional physical measurement of a component of the marine mooring system, such as a measurement of the wire rope for loss of material, and/or wire rope kinking.

The term "engineering opinion" as used herein can refer to the review, comparison and assessment of technical information, which can include: client data, operational history and inspection to known marine standards by qualified engineers.

The term "focused visual inspection" as used herein can refer to a visual inspection closer to the marine mooring system than the general visual inspection, such as within 1 to 6 meters of a component of a marine mooring system with one or more cameras looking at a specific wire rope of the mooring line.

The term "general visual inspection" as used herein can refer to observations made at a distance from a marine mooring system, such as within 3 meters to 20 meters of a marine mooring system and might be one or more underwater cameras looking at a mooring line of a mooring system.

The term "hierarchy of risk" as used herein can refer to a classification system applied to areas of the marine mooring system needing priority attention because of the possibility of failure. The areas are ranked for inspection and measurement. In an embodiment the hierarchy of risk can have Priority 1 areas for immediate inspection, Priority 2 areas to be inspected after Priority 1 areas and Priority 3 areas which may not need inspection at this time.

The term "hindcast weather conditions for a geographic area" as used herein can refer to a weather history of the site of the marine mooring system, which can include wave height, type of current, wind speed, named storms affecting the area, precipitation, presence of icebergs, temperatures, and combinations thereof.

The term "inspection data" as used herein can refer to data resulting from the general visual inspection, tools on the remotely operable subsea measurement and data collection system that collect data, which is not limited to cameras.

The term "insurance guidelines" as used herein can refer to the insurance industry guidance which are from a variety of sources, including a Library of Insurance Industry Guidelines from The Joint Rig Committee of the London Offshore Insurance Market.

The term "marine standards" as used herein refers marine standards can include standards such as those from the American Petroleum Institute (API), Lloyds Register (LR), American Bureau of Shipping,(ABS) and Bureau Veritas (BV). National regulatory standards used include standards from the National Transportation and Safety Authority (NTSA) of Kenya, United Kingdom Health and Safety Executive Organization (UKHSE) of the United Kingdom, National Offshore Petroleum Safety and Environmental Management Authority (NOPSEMA) of Australia and Bureau of Ocean Energy Management Regulation Enforcement (BOEMRE) of the United States.

The term "a library of insurance guidelines" as used herein can refer to a dynamic library of guidelines for marine mooring systems such as those maintained by The Joint Rig Committee of the of London Offshore Insurance Market which can be resident in an insurance data base connected to an insurance processor in communication with the network.

The term "marine mooring system" as used herein can refer to a system design to affix a floating object to the sea floor. The marine mooring system can include anchors, connectors, chains, ropes, wire rope, winches, motors connected to winches, power supplies connected to the motors, at least one buoyant object or an object that can be ballasted and deballasted, beacons, chain stoppers, hawser tubes, or combinations thereof.

The term "network" can refer to a cellular network, a satellite network, a global communication network, such as the internet, a local area network, a wide area network, a similar usable network or combinations thereof.

The term "post inspection mooring compliance status report" as used herein can refer to a report that compares inspection data to client data and/or to known marine standards and/or insurance guidelines.

The term "a qualitative inspection" as used herein can refer to observed properties such as a missing fastener of a mooring line.

The term "quantitative inspection" refers to a measured property, such as a wear rate measured using a tubular measurement system or a chain measurement system.

The term "rates of degradation of individual marine mooring components" as used herein can refer to an amount of material loss in millimeters over days, such as 2 mm over 2 years for a wire rope for a component or an area of a marine mooring system.

The term "risk based inspection plan" as used herein can refer to a plan with procedures for servicing components of the mooring system using a hierarchy of risk. In embodiments, the risk based inspection plan can include a general visual inspection, then a focused visual inspection and finally a detailed physical inspection. The risk based inspection plan is designed to provide insights into degradative mechanisms and insights into the physical condition of degraded components of the marine mooring system enabling prioritization of components of the system.

The term "weather forecast" as used herein can refer to predictions of named storms or severe storm conditions, such as 100 year storms, for a given geographic area for a given time period. The term "weather forecast" can refer to a weather prediction of meteorological phenomena in a defined geographic area over a defined time period and can also include: wave height, type of current, wind speed, named storms affecting the area, precipitation, presence of icebergs, temperatures, and combinations thereof.

The terms "mooring fitness for purpose assessment report" and "MFPA Report" as used herein can refers to a report that is comprised of text, data, photographs, charts, drawings, diagrams and tables which is computer generated. The mooring fitness for purpose assessment (MFPA) report can further include: key findings, recommendations, un-inspectable locations, implications of the un-inspectable locations, implications of the findings, and results of specific mooring system components. A MFPA report can, for example, identify wear capacity and fatigue of specific mooring system components and how they compare to the known marine standards.

In further detail, this report integrates all models, data, information, knowledge and opinions to provide valuable client information on current status and recommendations of the mooring system. This report can include an assessment of the most probable mooring failure mode(s), the present day mooring operational status and fitness for purpose, a consideration of remaining mooring life, and recommendations for future mooring management (future inspection, maintenance, monitoring and replacement programs).

The invention is for a method for assessing a marine mooring system while the marine mooring system is installed in water for ensuring compliance with known marine standards.

The method uses an administrative processor connected to an administrative data storage connected to a network.

The method obtains client data for a marine mooring system installed in water from a client data storage connected to a client processor connected to the network and then stores the client data in a client profile in the administrative data storage using computer instructions in the administrative data storage.

The client data includes: specifications of the marine mooring system design; and at least one of: hindcast weather conditions for a geographic area of a marine mooring system; operating history of a marine mooring system installed in water; vessel information on vessels connecting to a marine mooring system installed in water; inspection history of a marine mooring system installed in water; offloading history of a vessel secured to the marine mooring system installed in water.

The method downloads from a library of insurance guidelines, insurance guidelines for the marine mooring system to the client profile.

The method then downloads from a library of known marine standards marine standards for the marine mooring system to the client profile.

The method has as the next step, comparing at least one of: the insurance guideless and the standards to the client data to form a compliance status report for the marine mooring system showing the difference between the client data and the marine standards 66, the insurance guidelines 56, or both.

The method can then insert information from the compliance status report into a dynamic mooring system model to provide a risk based inspection plan for a qualitative inspection and for a quantitative inspection of the marine mooring system.

The dynamic mooring system model contains computer instructions for integrating hindcast weather conditions, weather forecast, with the specifications of the marine mooring system forming a risk based inspection plan.

The dynamic mooring system model contains computer instructions for integrating an inspection history of the marine mooring system into the risk based inspection plan.

The dynamic mooring system model contains computer instructions for integrating vessel information into the risk based inspection plan.

The method identifies areas for inspection classified using a hierarchy of risk using computer instructions in the data storage.

The method identifies areas for inspection classified using rates of degradation of individual marine mooring components due to at least one of: wear, erosion, and corrosion using computer instructions in the data storage.

The method identifies areas for inspection classified using an end of life time frame of a marine mooring component due to at least one of: abrasion, erosion, corrosion, and impact in the risk based inspection plan.

The method then inspects the marine mooring system, using the risk based inspection plan for the qualitative inspection and for the quantitative inspection of the marine mooring system and a subsea measurement and data collection system capable of withstanding depths to 100 meters without failing, to measure and inspect the marine mooring system creating inspection data.

The method then receives inspection data from the subsea measurement and data collection system into the administrative data storage and form a post inspection mooring compliance status report using the inspection data.

The method inserts inspection data and data from the client profile into the dynamic mooring system model forming a mooring fitness for purpose assessment report (MFPA) to display compliance status of the marine mooring system using inspection data.

In embodiments, the risk based inspection plan consists of priority based instructions for inspecting and measuring portions of a marine mooring system.

In embodiments, the method involves additionally inspecting the marine mooring system forming inspection data iteratively and inserting the additional inspection data into the mooring fitness for purpose assessment report forming an updated report.

In embodiments, the method involves generating an engineering opinion including certifications, assertions, and reports relative to obtaining a quote of underwriter coverage of the marine mooring system.

In embodiments, the method involves providing the vessel information for vessels connecting to the marine mooring system including: an offloading system of a vessel; a vessel tonnage, a name of a vessel, an orientation of a marine mooring system when connecting to a vessel, a spread moored vessel, a turret moored vessel, a draft of a vessel, a cargo capacity of a vessel, and combinations thereof

In embodiments, the method involves using as the offloading system, which is a shuttle tanker, a pipeline, or a barge.

In embodiments, the method involves remotely operating the subsea measurement and data collection system capable of withstanding depths to 100 meters without failing, which includes a tubular measurement system, a mechanical chain measuring system, an optical chain measurement system, a 3D photogrammetric modeling system, an high definition 3D video system, a magnetic flux leakage detection system, or combinations thereof.

In embodiments, the method involves using a subsea measurement and data collection tool capable of withstanding depths to 10,000 meters without failing.

In embodiments, the method involves inputting into the client profile: a client name, a client address, marine mooring system identifier, geographic location of the marine mooring system and marine mooring system specifications, operating history and offloading history, and combinations thereof

In embodiments, the method involves using data on impacts caused from fishing activities and associated fishing equipment hitting the marine mooring system, dropped objects from a production vessel connected to the marine mooring system, dropped objects from a service vessel present and supporting the vessel with the marine mooring system, vessels hitting the marine mooring system, debris hitting the marine mooring system, and combinations thereof

In embodiments, the method involves inputting into the operating history of the marine mooring system information on wind forces applied to a vessel connected to the marine mooring system, wave forces impacting the vessel connected to the marine mooring system that apply torque and tension to the marine mooring system, current direction and current velocity impacting the vessel connected to the marine mooring system, and combinations thereof

In embodiments, the method involves inputting into the offloading history of vessels attaching to the marine mooring system including information on frequency of shuttle tankers connecting to the marine mooring system over time, cargo specifications loaded and offloaded using the marine mooring system, draft of the vessels connecting to the marine mooring system, and combinations thereof.

In embodiments, the method involves using specifications of the marine mooring system design including instrument type, equipment type, layout of the marine mooring system, depth of water in which a marine mooring system is deployed, quantity of mooring lines, compositions of materials used in the marine mooring system, age of components in the marine mooring system, quantities of connectors, and presence of inline buoyancy in the marine mooring system, and combinations thereof

In embodiments, the method involves inputting into the inspection history of the marine mooring system a date of an inspections, a video of an inspection, a photograph of an inspection, a subjective observation by an inspection personnel, dimensional data from inspection tools, and combinations thereof.

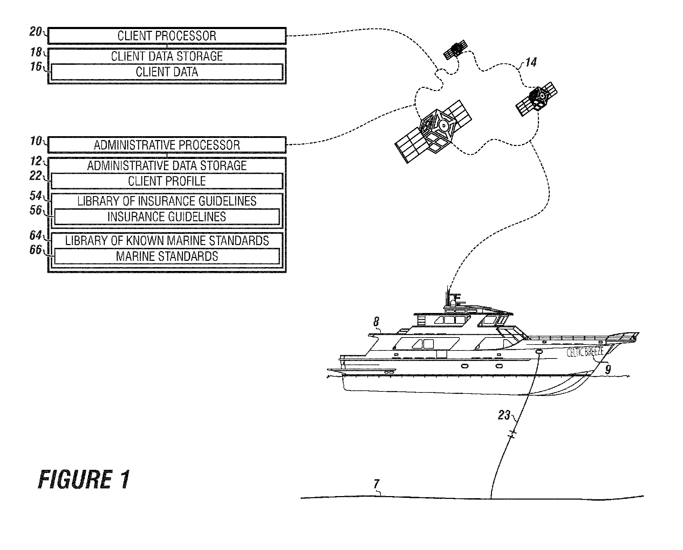

Turning now to the Figures, Figure 1 is a diagram of equipment usable with the method according to one or more embodiments.

Figure 1 shows an administrative processor 10 connected to an administrative data storage 12. The administrative processor is connected to a network 14.

The administrative data storage 12 can contain computer instructions for instructing the administrative processor 10 to obtain client data 16 from a client data storage 18 connected to a client processor 20.

The client processor like the administrative processor can be a computer, or a plurality of computers connected together.

The client data storage, like the administrative data storage can be a non-transitory computer readable medium.

The client processor 20 can connect to the network 14.

The administrative data storage 12 stores the client data into a client profile 22 in the administrative data storage 12.

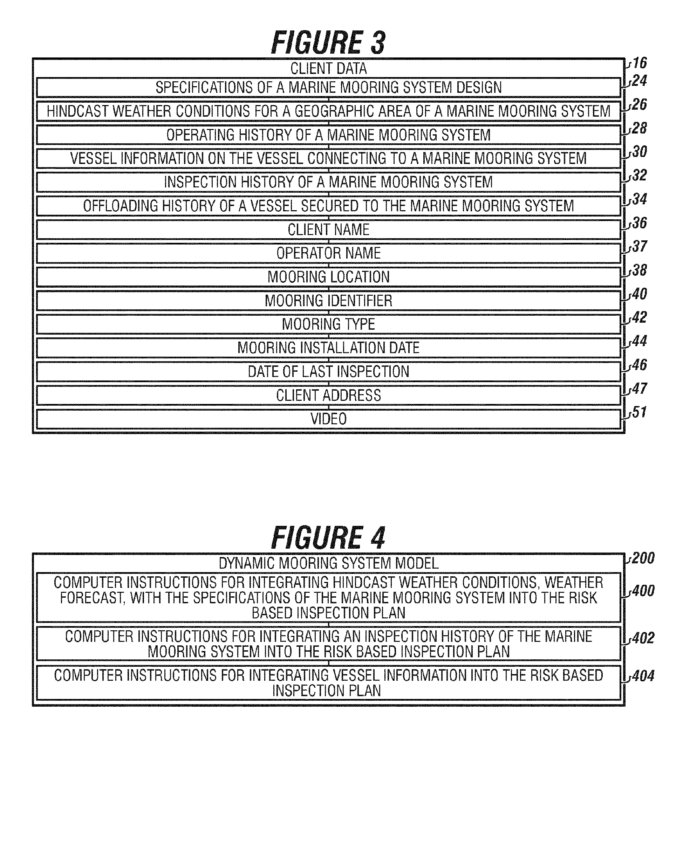

Examples are shown in Figure 3 of client data 16.

Examples of client data are shown in Figure 1 and include the type of vessel 8, the name of the vessel 9, the type of mooring or anchoring system 23, and the depth of the sea floor 7.

The administrative data storage 12 includes a library of known marine standards 64. The library of known marine standards contains marine standards 66.

The administrative data storage 12 includes a library of insurance guidelines 54 which contain various types of insurance guidelines 56 for use in the marine industries.

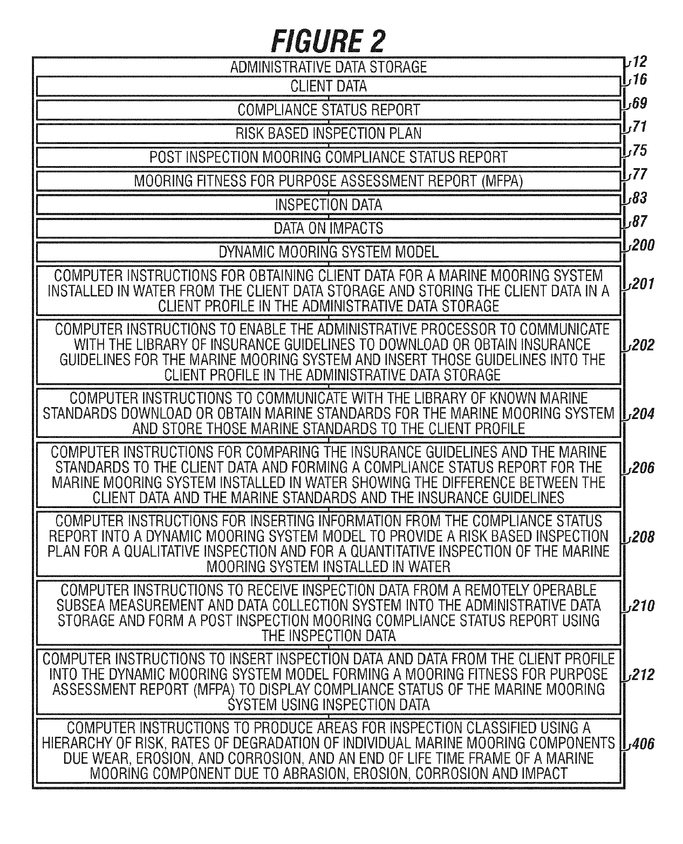

Figure 2 is a diagram of the administrative data storage 12 containing computer instructions according to one or more embodiments of the method.

The administrative data storage 12 can contain client data 16, a compliance status report 69, a risk based inspection plan 71, a post inspection mooring compliance status report 75, a mooring fitness for purpose assessment report (MFPA) 77, and a dynamic mooring system model 200.

The administrative data storage 12 can contain inspection data 83 and data on impacts 87.

In embodiments, the administrative data storage 12 can contain various computer instructions for instructing the processor including computer instructions 201 in the administrative data storage to instruct the administrative processor to obtaining client data for a marine mooring system installed in water from a client data storage and storing the client data in a client profile in the administrative data storage.

Computer instructions 202 can be in the administrative data storage to instruct the administrative processor to communicate with the library of insurance guidelines 54 shown in Figure 1, and download or obtain insurance guidelines 56, shown in Figure 1 for the marine mooring system and insert those insurance guidelines 56 into the client profile 22 in the administrative data storage.

The administrative data storage 12 can contain computer instructions 204 to communicate with the library of known marine standards 64 and download or obtain marine standards 66 for the marine mooring system and store those marine standards to the client profile 22.

The administrative data storage 12 can contain computer instructions 206 for comparing at least one of: the insurance guidelines 56 and the marine standards 66 to the client data 16 and forming a compliance status report 69 for the marine mooring system installed in water showing the difference between the client data and the marine standards or the insurance guidelines, or the marine standards and the insurance guidelines.

The administrative data storage 12 can contain computer instructions 208 for inserting information from the compliance status report 69 into a dynamic mooring system model 200 to produce a risk based inspection plan 71 for a quantitative inspection and for a quantitative inspection of the marine mooring system installed in water.

The administrative data storage 12 can contain computer instructions 210 in the administrative data storage to receive inspection data 83 from a remotely operable subsea measurement and data collection system 73 into the administrative data storage and form a post inspection mooring compliance status report 75 using the inspection data.

The administrative data storage 12 can contain computer instructions 212 to insert inspection data 83 and data from the client profile 22 into the dynamic mooring system model 200 for forming a mooring fitness for purpose assessment report (MFPA) 77 to display compliance status of the marine mooring system using inspection data.

The administrative data storage 12 can contain computer instructions 406 to produce areas for inspection classified using a hierarchy of risk, rates of degradation of individual marine mooring components due wear, erosion, and corrosion, and an end of life time frame of a marine mooring component due to abrasion, erosion, corrosion, and impact.

Figure 3 is a diagram of client data 16 usable with the method according to one or more embodiments

The client data 16 can include specifications of a marine mooring system design 24, such as list of components for the mooring system, sizes of chain, size of wire rope, type of anchor, location and amount of mid-water buoyancy.

The client data 16 can include hindcast weather conditions for a geographic area of a marine mooring system 26, such as wave height never exceeds 3 feet.

The client data 16 can include operating history of a marine mooring system installed 28, such as a wire rope failure that occurred in February of 2013.

The client data 16 can include vessel information on the vessel connecting to a marine mooring system 30, such as information on shuttle tankers connecting weekly to the mooring system using a latching mechanism.

The client data 16 can include an inspection history of a marine mooring system 32, such as all the details of the last inspection of the mooring system while it was installed in water.

The client data 16 can include an offloading history of a vessel secured to the marine mooring system 34, such as how type and amount of oil offloaded from the vessel.

The client data 16 can additionally include a client name 36.

The client data 16 can include an operator's name 37, such as Jordon's mooring services.

The client data 16 can include a mooring location 38, such as 75 miles due south of New Orleans.

The client data 16 can include a mooring identifier 40 (such as mooring number 345-76).

The client data 16 can include a mooring type 42, such as a spread moored catenary system.

The client data 16 can include a mooring installation date 44 (such as July 04, 2004).

The client data 16 can include a date of last inspection 46 (such as February 01, 2012).

The client data 16 can include client address 47.

The client data 16 can include video 51 (typically related to the client data).

Figure 4 is a diagram of the dynamic mooring system model 200 according to one or more embodiments.

The dynamic mooring system model 200 can contain computer instructions 400 for integrating hindcast weather conditions, weather forecast, with the specifications of the marine mooring system into the risk based inspection plan 71.

The dynamic mooring system model 200 can contain computer instructions 402 for integrating an inspection history of the marine mooring system into the risk based inspection plan 71.

The dynamic mooring system model 200 can contain computer instructions 404 for integrating vessel information into the risk based inspection plan 71.

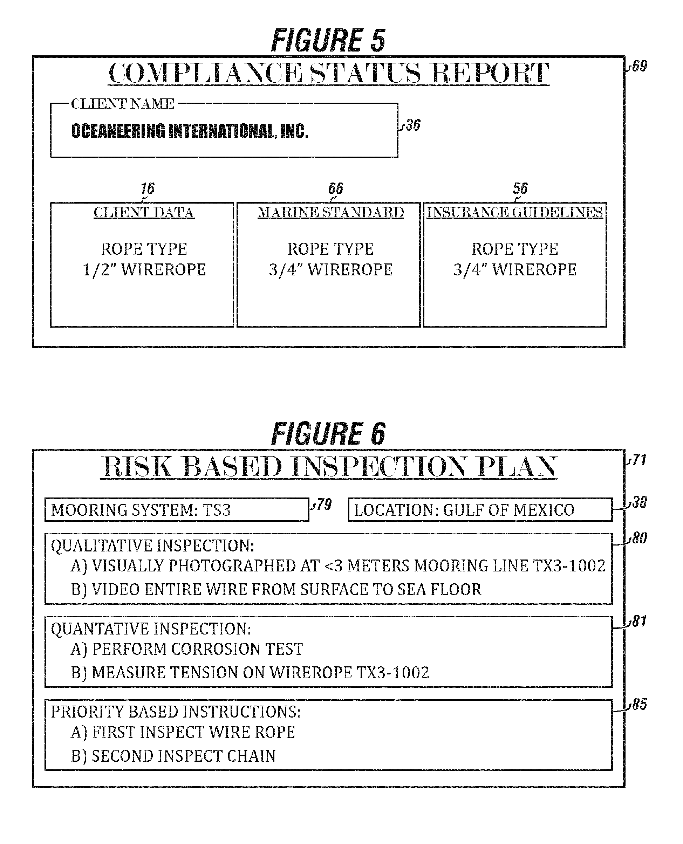

Figure 5 is an exemplary compliance status report 69 according to one or more embodiments.

In this example, the compliance status report 69 is depicted showing the client name 36 as Oceaneering International, Inc.

The compliance status report 69 is depicted showing client data 16 as ½ inch wire rope.

The compliance status report 69 is depicted showing the marine standard 66, as ¾ inch wire rope.

The compliance status report 69 is depicted showing the insurance guidelines 56, as % inch wire rope.

The compliance status report 69, in this example, shows the client that the wire rope does NOT comply with both the insurance guideline and the marine standards and should be addressed.

Figure 6 is an exemplary risk based inspection plan 71 according to one or more embodiments.

In this example, the risk based inspection plan 71 is depicted showing a mooring system identifier 79 (identified as"TS3") and the mooring location 38 (identified as "Gulf of Mexico").

The exemplary risk based inspection plan 71 also shows the qualitative inspection requirements 80. In this example, the qualitative inspection requirements 80 are to first visually photograph, at 3 meters or less, using a mooring line identified as TX3-1002 and video the entire wire from surface to sea floor.

The exemplary risk based inspection plan 71 also shows the quantitative inspection requirements 81. In this example, the quantitative inspection requirements 81 are to first perform a corrosion test and then measure the tension on the TX3-1002 wire rope.

The exemplary risk based inspection plan 71 also shows priority based instructions 85. In this example, the priority based instructions 85 are to first inspect the wire rope and then inspect the chain.

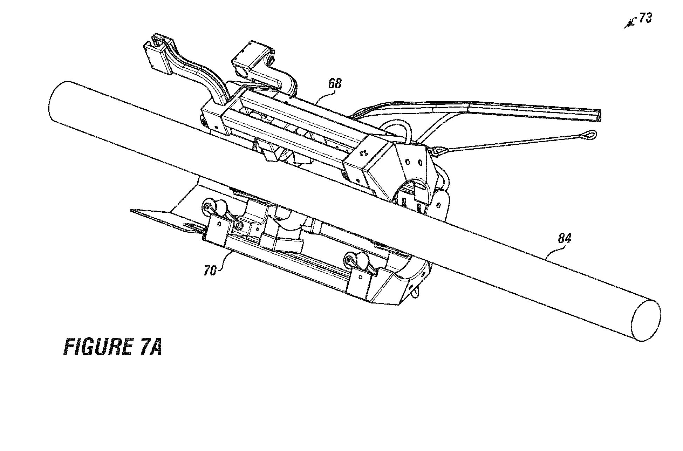

Figures 7A-7D show diagrams of a subsea measurement and data collection system 73 usable in implementing the method according to one or more embodiments. This subsea measurement and collection system is described in co-owned US Patent 8105442 and incorporated by reference herein.

The subsea measurement and data collection system 73 can be capable of withstanding depths to 100 meters without failing, to measure and inspect the marine mooring system and create inspection data.

In this embodiment, the subsea measurement and data collection system 73 can be the remotely operable to clean, inspect, and measure a tubular 84 having a tubular perimeter.

The subsea measurement and data collection system 73 can have a first housing portion 68 connected to a second housing portion 70 which are hinged together in this Figure.

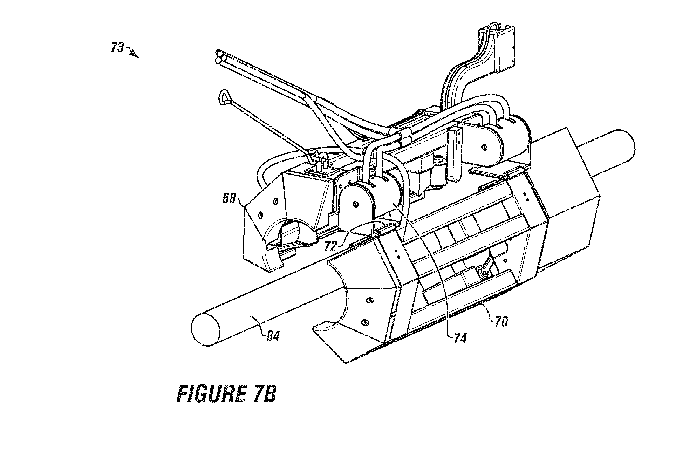

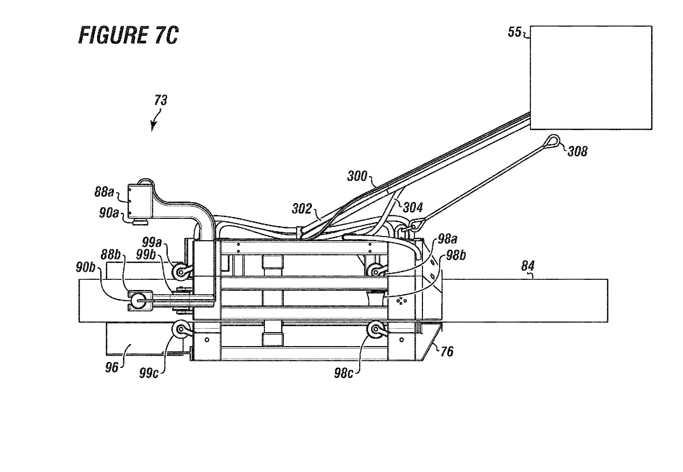

Figure 7B shows least one hinge 72 operable by at least one hydraulic actuator 74, thereby forming a closable housing 76 (shown in Figure 7C) around the tubular 84.

The subsea measurement and data collection system 73 can have a first housing portion 68 connected to a second housing portion 70.

Figure 7C shows the subsea measurement and data collection system 73 with enclosable camera blocks 88a and 88b.

In embodiments, additional enclosable camera blocks can be used.

Each enclosable camera block can contain at least one digital camera. Digital cameras 90a and 90b are shown disposed on an inspection end of the closable housing.

Each enclosable camera block can be positioned at 90 degrees relative to each additional enclosable camera block.

In one or more embodiments, each enclosable camera block can be positioned at 90 degrees relative to the longitudinal axis of a tubular 84 being inspected.

The video cameras can record two cross-sectional measurements of the tubular 84 at 90 degrees to each other simultaneously.

An imaging target plate 96 can be disposed opposite one of the enclosable camera blocks, shown in this Figure 7C as element 88b. The imaging target plate enables continuous digital imaging of the tubular 84 as the closable housing engages and rolls along the tubular down the longitudinal axis.

A first set of roller assemblies 98ab and 98c can be disposed on the cleaning end of the subsea measurement and data collection system 73 for engaging a perimeter of the tubular 84.

A second set of roller assemblies 99ab and 99c can be disposed on the inspection end of the subsea measurement and data collection system 73 for engaging the tubular perimeter.

Four roller assemblies can be used in each set.

In one or more embodiments, a communication conduit 300 can be used to transfer a plurality of signals from at least one of the digital cameras to a remote location 55.

In one or more embodiments, a hydraulic conduit 302 can be used to provide hydraulic fluid to a hydraulic actuator from the remote location 55.

In one or more embodiments, a pressurized water conduit 304 can be used to provide high pressure water to a pressurized water jet unit on the subsea measurement and data collection system 73 from the remote location 55.

A tether 308 provides a variable tension from the remote location 55 to the closable housing 76 for enabling the closable housing to connect to the tubular 84 and roll along the tubular for cleaning, inspection, and measuring of the tubular while the tubular is in use without interrupting the use of the tubular.

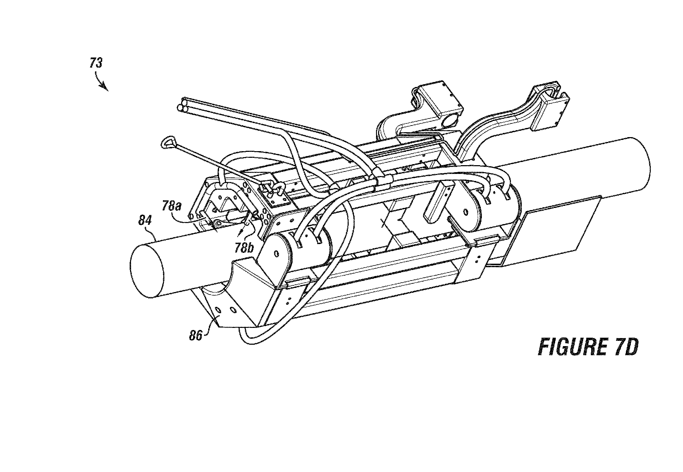

Figure 7D shows the subsea measurement and data collection system 73 having at least one pressurized water jet unit with nozzles 78a and 78b disposed on a cleaning end of the closable housing. At least one nozzle of the pressurized water jet unit is positioned to impact the tubular 84.

A marine growth plough 86 is also used for engaging the tubular 84. The marine growth plough is disposed on the cleaning end.

In one or more embodiments, the subsea measurement and data collection system 73 can use a remote operated vehicle (ROV) and a top side computer suite.

In embodiments, the invention uses a top side computer suite that can have a processor with computer readable medium.

The computer-readable medium can include instructions recorded on the computer readable medium; wherein the video cameras transmit a signal via the remote operated vehicle to the top side computer suite and the instructions, when executed, instruct the processor to process video signals from the video camera at 50 frames per second in real time while simultaneously applying a mathematical model for continuous measurement of the tubular creating a geometric tubular profile.

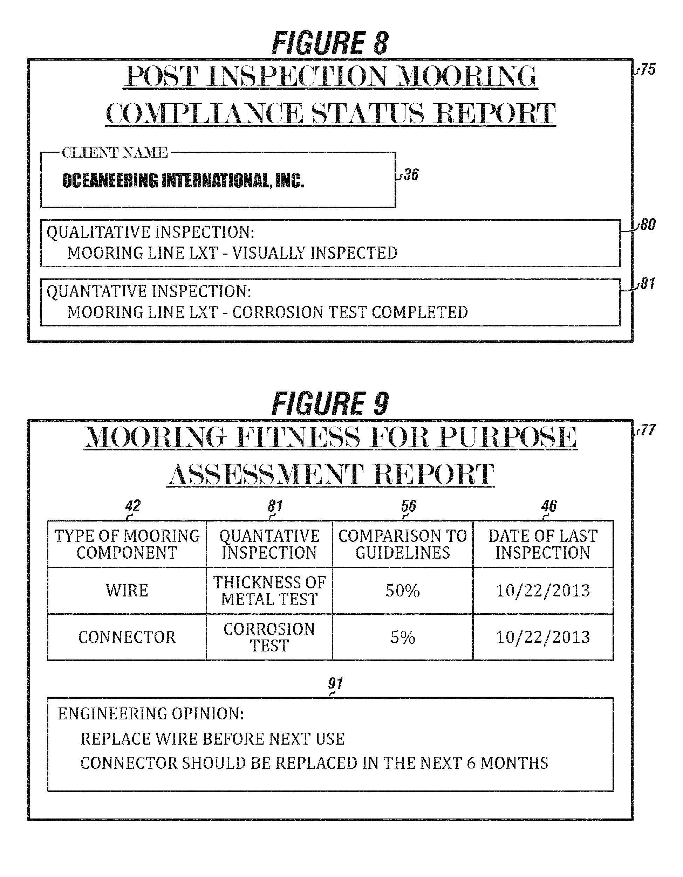

Figure 8 is an exemplary post inspection compliance status report 75 according to one or more embodiments.

In this example, the post inspection mooring compliance status report 75 is shown with a client name 36 ("Oceaneering International, Inc."), a qualitative inspection result 80 (showing as "visually inspected"), and a quantitative inspection result 81 (showing as "completed").

Figure 9 is an exemplary mooring fitness for a purpose assessment report (MFPA) 77 according to one or more embodiments.

In this example, the mooring fitness for a purpose assessment report (MFPA) 77 includes type of mooring component 42 ("wire" and "connector").

The mooring fitness for a purpose assessment report has the quantitative inspection 81 ("thickness of metal test" and "corrosion test").

The mooring fitness for a purpose assessment report has a comparison to insurance guidelines 56 ("50%" and "5%").

The mooring fitness for a purpose assessment report has the date of the last inspection 46 ("October 22, 2013").

The mooring fitness for a purpose assessment report (MFPA) 77 includes an engineering opinion 91. In the example, the engineering opinion is to replace the wire before next use and that the connector should be replaced in the next six months.

In embodiments, qualitative inspection results could be presented on the mooring fitness for purpose assessment report.

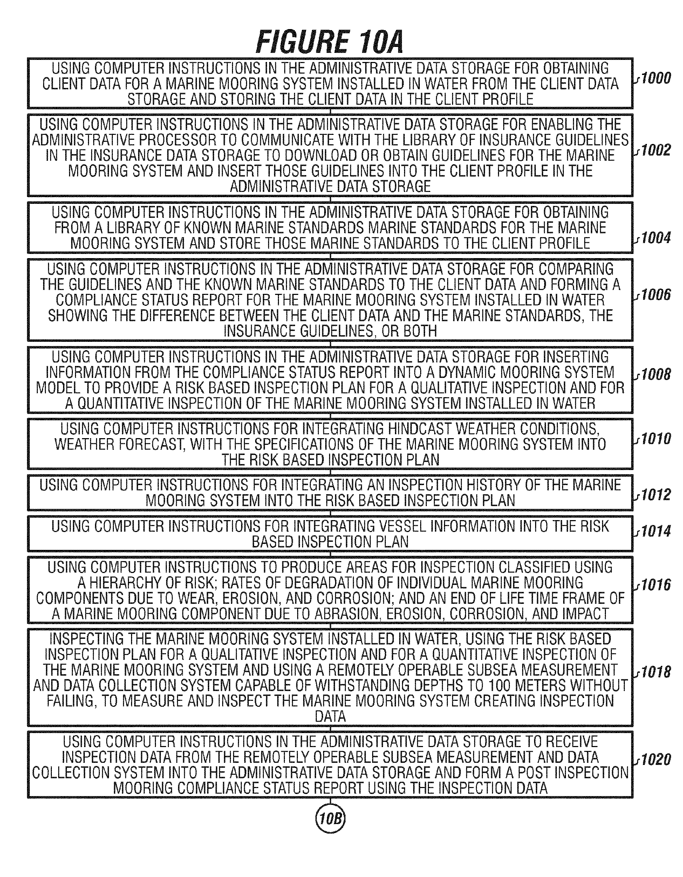

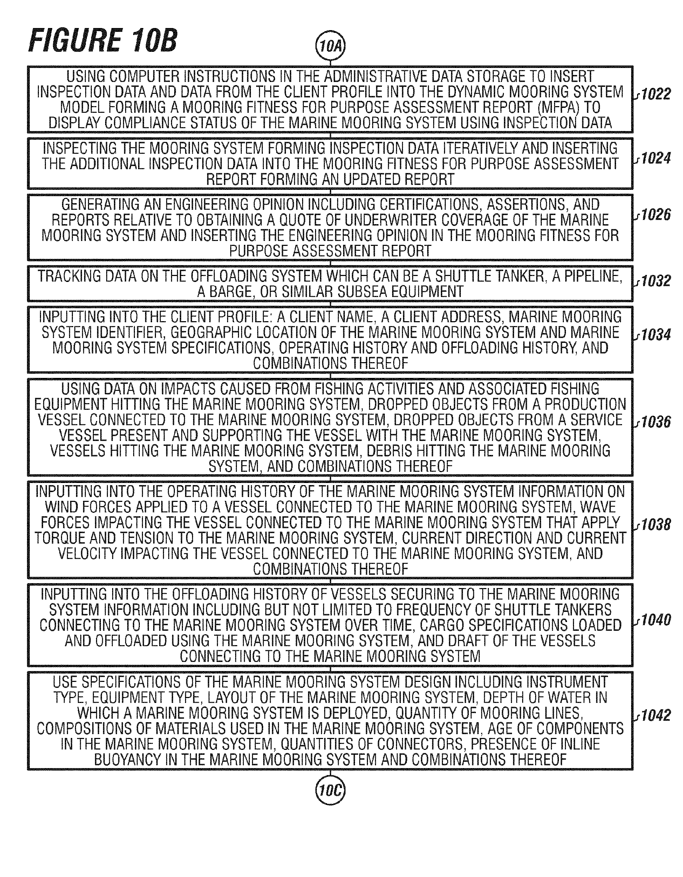

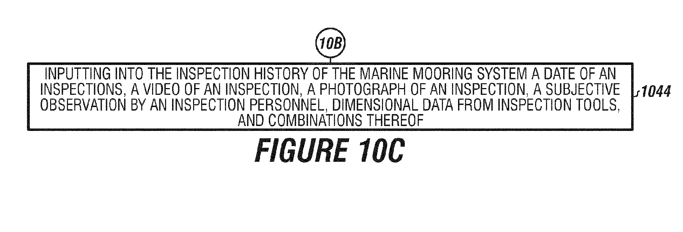

Figures 10A through 10C depict steps of the method according to one or more embodiments.

The method can include using computer instructions in the administrative data storage for obtaining client data for a marine mooring system installed in water from the client data storage and storing the client data in the client profile, illustrated as step 1000.

Examples of client data include: specifications of the marine mooring system design; hindcast weather conditions for a geographic area of a marine mooring system; operating history of a marine mooring system installed in water; vessel information on vessels connecting to a marine mooring system installed in water; inspection history of a marine mooring system installed in water; and offloading history of a vessel connected to the marine mooring system installed in water, and combinations thereof

The embodied methods can include using computer instructions in the administrative data storage for enabling the administrative processor to communicate with the library of insurance guidelines in the insurance data storage to download or obtain guidelines for the marine mooring system and insert those guidelines into the client profile in the administrative data storage, as illustrated by step 1002.

The embodied methods can include using computer instructions in the administrative data storage for obtaining from a library of known marine standards marine standards for the marine mooring system and store those marine standards to the client profile, illustrated as step 1004.

The embodied methods can include using computer instructions in the administrative data storage for comparing the guidelines and the marine standards to the client data and forming a compliance status report for the marine mooring system installed in water showing the difference between the client data and the marine standards, the insurance guidelines, or both, illustrated as step 1006.

The embodied methods can include using computer instructions in the administrative data storage for inserting information from the compliance status report into a dynamic mooring system model to provide a risk based inspection plan for a qualitative inspection and for a quantitative inspection of the marine mooring system installed in water, illustrated as step 1008.

The embodied methods can include using computer instructions for integrating hindcast weather conditions, weather forecast, with the specifications of the marine mooring system into the risk based inspection plan, illustrated as step 1010.

The embodied methods can include using computer instructions for integrating an inspection history of the marine mooring system into the risk based inspection plan, illustrated as step 1012.

The embodied methods can include using computer instructions for integrating vessel information into the risk based inspection plan, illustrated as step 1014.

The embodied methods can include computer instructions to produce areas for inspection classified using a hierarchy of risk; rates of degradation of individual marine mooring components due to wear, erosion, and corrosion; and an end of life time frame of a marine mooring component due to abrasion, erosion, corrosion, and impact, illustrated as step 1016.

The embodied methods can include inspecting the marine mooring system installed in water, using the risk based inspection plan for a qualitative inspection and for a quantitative inspection of the marine mooring system and using a remotely operable subsea measurement and data collection system capable of withstanding depths to 100 meters without failing, to measure and inspect the marine mooring system creating inspection data, illustrated as step 1018.

The embodied methods can include using computer instructions in the administrative data storage to receive inspection data from the remotely operable subsea measurement and data collection system into the administrative data storage and form a post inspection mooring compliance status report using the inspection data, illustrated as step 1020.

The embodied methods can include using computer instructions in the administrative data storage to insert inspection data and data from the client profile into the dynamic mooring system model forming a mooring fitness for purpose assessment report (MFPA) to display compliance status of the marine mooring system using inspection data, illustrated as step 1022.

In one or more embodiments, the risk based inspection plan can consist of priority based instructions for inspecting and measuring portions of a marine mooring system.

The embodied methods can include inspecting the mooring system forming inspection data iteratively and inserting the additional inspection data into the mooring fitness for purpose assessment report forming an updated report, illustrated as step 1024.

The embodied methods can include generating an engineering opinion including certifications, assertions, and reports relative to obtaining a quote of underwriter coverage of the marine mooring system and inserting the engineering opinion in the mooring fitness for purpose assessment report, illustrated as step 1026.

In embodiments, the method can use the vessel information for vessels connecting to the marine mooring system information on: an offloading system of a vessel, a vessel tonnage, a name of a vessel, an orientation of a marine mooring system when connecting to a vessel, a spread moored vessel, a turret moored vessel, a draft of a vessel, a cargo capacity of a vessel, or combinations thereof.

The embodied methods can include tracking data on the offloading system which can be a shuttle tanker, a pipeline, a barge, or similar subsea equipment, illustrated as step 1032.

In embodiments, the embodied methods can use the subsea measurement and data collection system, which can include a tubular measurement system, a mechanical chain measuring system, an optical chain measurement system, a 3D photogrammetric modeling system, a high definition 3D video system, a magnetic flux leakage detection system, or combinations thereof.

The embodied methods can include inputting into the client profile: a client name, a client address, marine mooring system identifier, geographic location of the marine mooring system and marine mooring system specifications, operating history and offloading history, and combinations thereof, illustrated as step 1034.

The embodied methods can include using data on impacts caused from fishing activities and associated fishing equipment hitting the marine mooring system, dropped objects from a production vessel connected to the marine mooring system, dropped objects from a service vessel present and supporting the vessel with the marine mooring system, vessels hitting the marine mooring system, debris hitting the marine mooring system, and combinations thereof, illustrated as step 1036.

The embodied methods can include inputting into the operating history of the marine mooring system information on wind forces applied to a vessel connected to the marine mooring system, wave forces impacting the vessel connected to the marine mooring system that apply torque and tension to the marine mooring system, current direction and current velocity impacting the vessel connected to the marine mooring system, and combinations thereof, illustrated as step 1038.

The embodied methods can include inputting into the offloading history of vessels securing to the marine mooring system information including but not limited to frequency of shuttle tankers connecting to the marine mooring system over time, cargo specifications loaded and offloaded using the marine mooring system, and draft of the vessels connecting to the marine mooring system, illustrated as step 1040.

The embodied methods can include using specifications of the marine mooring system design including instrument type, equipment type, layout of the marine mooring system, depth of water in which a marine mooring system is deployed, quantity of mooring lines, compositions of materials used in the marine mooring system, age of components in the marine mooring system, quantities of connectors, presence of inline buoyancy in the marine mooring system and combinations thereof, illustrated as 1042.

The embodied methods can include inputting into the inspection history of the marine mooring system a date of an inspections, a video of an inspection, a photograph of an inspection, a subjective observation by an inspection personnel, dimensional data from inspection tools, and combinations thereof, illustrated as step 1044.

While these embodiments have been described with emphasis on the embodiments, it should be understood that within the scope of the appended claims, the embodiments might be practiced other than as specifically described herein.

## Claims

1. A method for assessing a marine mooring system while the marine mooring system is installed in water for ensuring compliance with selected marine standards, wherein the method comprises:
a. using an administrative processor connected to both an administrative data storage and a network and obtaining client data for a marine mooring system installed in water from a client data storage connected to a client processor connected to the network and storing the client data in a client profile in the administrative data storage, wherein the client data includes:
(i) specifications of the marine mooring system design; and
(ii) at least one of:
1. hindcast weather conditions for a geographic area of a marine mooring system;
2. operating history of a marine mooring system installed in water;
3. vessel information on vessels connecting to a marine mooring system installed in water;
4. inspection history of a marine mooring system installed in water; and
5. offloading history of a vessel secured to the marine mooring system installed in water;
b. communicating with the library of insurance guidelines to download or obtain insurance guidelines for the marine mooring system and insert those insurance guidelines into the client profile;
c. communicating with the library of known marine standards to download or obtain marine standards for the marine mooring system and store those marine standards to the client profile;
d. comparing at least one of: the insurance guidelines, and the marine standards, to the client data and forming a compliance status report for the marine mooring system installed in water, showing the difference between the client data and the marine standards, and the insurance guidelines;
e. inserting information from the compliance status report into a dynamic mooring system model 200 to provide a risk based inspection plan 71 for a qualitative inspection and for a quantitative inspection of the marine mooring system installed in water, the dynamic mooring system model 200 consisting of:
(i) computer instructions 400 for integrating hindcast weather conditions, weather forecast, with the specifications of the marine mooring system into the risk based inspection plan;
(ii) computer instructions 402 for integrating an inspection history of the marine mooring system into the risk based inspection plan;
(iii) computer instructions 404 for integrating vessel information into the into the risk based inspection plan;
f. using the dynamic mooring system model to produce:
(i) areas for inspection classified using a hierarchy of risk;
(ii) rates of degradation of individual marine mooring components due to at least one of: wear, erosion, and corrosion; and
(iii) an end of life time frame of a marine mooring component due to at least one of: abrasion, erosion, corrosion, and impact; and
g. inspecting the marine mooring system, using the risk based inspection plan for the qualitative inspection and for the quantitative inspection of the marine mooring system and a subsea measurement and data collection system capable of withstanding depths to 100 meters without failing, to measure and inspect the marine mooring system creating inspection data;
h. receive inspection data from a remotely operable subsea measurement and data collection system into the administrative data storage and form a post inspection mooring compliance status report using the inspection data; and
i. insert inspection data and data from the client profile and into the dynamic mooring system model forming a mooring fitness for purpose assessment report (MFPA) 77 to display compliance status of the marine mooring system using inspection data.

2. The method of claim 1, wherein the risk based inspection plan consists of priority based instructions for inspecting and measuring portions of a marine mooring system.

3. The method of claim 1, additionally inspecting the marine mooring system forming inspection data iteratively and inserting the additional inspection data into the mooring fitness for purpose assessment report forming an updated report.

4. The method of claim 1, generating an engineering opinion including certifications, assertions, and reports relative to:
(i) obtaining a guarantee of underwriter coverage of the marine mooring system; or
(ii) providing a verification of compliance with the insurance industry guidance for the marine mooring system as obtained from the library of insurance industry guidelines from The Joint Rig Committee of the of London Offshore Insurance Market.

5. The method of claim 1, generating a graphical visualization that is a line graph, a tabular presentation, or both.

6. The method of claim 1, providing the vessel information for vessels connecting to the marine mooring system including: an offloading system of a vessel; a vessel tonnage, a name of a vessel, an orientation of a marine mooring system when connecting to a vessel, a spread moored vessel, a turret moored vessel, a draft of a vessel, a cargo capacity of a vessel, and combinations thereof.

7. The method of claim 6, using as the offloading system, which is a shuttle tanker, a pipeline, or a barge.

8. The method of claim 1, further comprising remotely operating the subsea measurement and data collection system capable of withstanding depths to 100 meters without failing, which includes a tubular measurement system, a mechanical chain measuring system, an optical chain measurement system, a 3D photogrammetric modeling system, an high definition 3D video system, a magnetic flux leakage detection system, or combinations thereof

9. The method of claim 8, using a subsea measurement and data collection tool capable of withstanding depths to 10000 meters without failing.

10. The method of claim 1, inputting into the client profile: a client name, a client address, marine mooring system identifier, geographic location of the marine mooring system and marine mooring system specifications, operating history and offloading history, and combinations thereof.

11. The method of claim 1, using data on impacts caused from fishing activities and associated fishing equipment hitting the marine mooring system, dropped objects from a production vessel connected to the marine mooring system, dropped objects from a service vessel present and supporting the vessel with the marine mooring system, vessels hitting the marine mooring system, debris hitting the marine mooring system, and combinations thereof.

12. The method of claim 1, inputting into the operating history of the marine mooring system information on wind forces applied to a vessel connected to the marine mooring system, wave forces impacting the vessel connected to the marine mooring system that apply torque and tension to the marine mooring system, current direction and current velocity impacting the vessel connected to the marine mooring system, and combinations thereof.

13. The method of claim 1, inputting into the offloading history of the marine mooring system information on frequency of shuttle tankers connecting to the marine mooring system over time, cargo specifications loaded and offloaded using the marine mooring system, draft of the vessels connecting to the marine mooring system, and combinations thereof.

14. The method of claim 1, using specifications of the marine mooring system design including instrument type, equipment type, layout of the marine mooring system, depth of water in which a marine mooring system is deployed, quantity of mooring lines, compositions of materials used in the marine mooring system, age of components in the marine mooring system, quantities of connectors, and presence of inline buoyancy in the marine mooring system, and combinations thereof.

15. The method of claim 1, inputting into the inspection history of the marine mooring system a date of an inspections, a video of an inspection, a photograph of an inspection, a subjective observation by an inspection personnel, dimensional data from inspection tools, and combinations thereof.

16. The method of claim 1, wherein the subsea measurement and data collection system cleans, inspects, and measures a tubular having a tubular perimeter, wherein the subsea measurement and data collection system comprises:
a. a first housing portion connected to a second housing portion using at least one hinge operable by at least one hydraulic actuator, forming a closable housing;
b. at least one pressurized water jet unit with at least one nozzle disposed on a cleaning end of the closable housing, wherein the at least one pressurized water jet unit with at least one nozzle is positioned to impact the tubular;
c. a marine growth plough for engaging the tubular, wherein the marine growth plough is disposed on the cleaning end;
d. at least one camera block, wherein each camera block contains at least one digital camera disposed on an inspection end of the closable housing, wherein each enclosable camera block includes a video camera, and wherein each enclosable camera block is positioned at 90 degrees relative to each other enclosable camera block and at 90 degrees relative to the longitudinal axis of the tubular, and the video cameras record two cross-sectional measurements of the tubular at 90 degrees to each other simultaneously;
e. an imaging target plate disposed opposite the at least one enclosable camera block for enabling continuous digital imaging of the tubular as the closable housing engages and rolls along the tubular;
f. a first set of roller assemblies disposed on the cleaning end for engaging the tubular perimeter;
g. a second set of roller assemblies disposed on the inspection end for engaging the tubular perimeter;
h. a communication conduit for transferring a plurality of signals from the at least one digital camera to a remote location;
i. a hydraulic conduit for providing hydraulic fluid from the remote location to the at least one hydraulic actuator;
j. a pressurized water conduit for providing high pressure water from the remote location to the at least one pressurized water jet unit;
k. a tether for providing a variable tension from the remote location to the closable housing for enabling the closable housing to connect to the tubular and roll along the tubular providing cleaning, inspection, and measuring of the tubular while the tubular is in use without interrupting use of the tubular;
l. a remote operated vehicle; and
m. a top side computer suite comprising: a processor and a computer-readable medium, the computer-readable medium including instructions recorded on the computer readable medium; wherein the video cameras transmit a signal via the remote operated vehicle to the top side computer suite and the instructions, when executed, instruct the processor to process video signals from the video camera at 50 frames per second in real time while simultaneously applying a mathematical model for continuous measurement of the tubular creating a geometric tubular profile.
